# EUROPEAN PATENT APPLICATION

(11) **EP 1 369 396 A1**
(43) Date of publication of application: **10.12.2003**
(21) Application number: 03011693.3
(22) Date of filing: 23.05.2003
(51) Int. Cl.: C03B 40/02, C03B 40/027, C03B 40/04, F23D 14/22

(54) **Method and apparatus for lubricating molten glass forming molds**

(30) Priority: 28.05.2002 US 157620
(71) Applicant: Owens-Brockway Glass Container Inc., Toledo, OH 43666 (US)
(72) Inventor: Scott, Garrett L., Toledo, OH 43617 (US); Burton, Robert L., Maumee, OH 43537 (US); Leidy, D. Wayne, Perrysburg, OH 43551 (US); Newsom, Daniel L., Oak Harbor, OH 43449 (US)
(74) Representative: Blumbach, Kramer & Partner GbR

(57) **Abstract**

A burner (16, 116, 216) of a surface-mixing type receives a carbonaceous fuel, for example, an acetylene-based fuel, from a fuel line (20) and an oxidant, such as relatively pure oxygen, from an oxidant line (18), the oxidant being supplied to the burner at a rate insufficient to result in complete combustion of the fuel, to thereby produced a sooty flame that is useful in applying lubricating soot particles to a molten glass contacting surface of a glass manufacturing machine. The burner, which is intermittently operated by a solenoid valve (38) in the oxidant line and by a solenoid valve (40) in the fuel line, has a fuel inlet passage (60) that extends along a longitudinal central axis of a tip element (56) of the burner, and an annular inlet passage (64) that surrounds the fuel inlet passage. The fuel inlet passage, which is otherwise closed at its downstream end, terminates in a multiplicity of separate passages (62) that are arranged in an annular array and through which fuel exits from a burner tip in an annular pattern on an interior of oxidant exiting from the burner in an annular pattern through a passage (66) in an annulus between the tip element and a cap element (58) of the burner. The burner serves to ensure rapid mixing of the fuel and oxidant streams downstream of the burner, to thereby rapidly form an ignitable mixture that can be ignited by a spark igniter (54). 2-way solenoid valves (38, 40) are provided in the oxidant and fuel lines, respectively, to permit the burner to be operated intermittently.

## Description

### FIELD OF THE INVENTION

This invention relates to a method and an apparatus for lubricating the molten glass contacting surfaces of glass forming molds. More particularly, this invention relates to a method and apparatus of the foregoing character for imparting a layer of carbon soot derived from the partial oxidation of a gas that contains acetylene, such as mapp gas (a mixture of methyl acetylene and propadiene).

### BACKGROUND OF THE INVENTION

As is known, for example, from U.S. Patent 5,958,099 (Morettin) or U.S. Patent 5,679,409 (Seeman), it is desirable to lubricate a molten glass contacting surface of a glass manufacturing machine, for example, an internal surface of a forming mold of such a machine, with a thin layer of carbon soot as a substitute for periodically brushing such a surface with a conventional oil and graphite-based mold dopant. Such a soot coating is obtained by the partial oxidation of a carbonaceous gas, such as acetylene or a mixture of an acetylene-based gas, such as methacetylene and propadiene (occasionally referred to as mapp gas or as MAPD gas) by way of a burner whose flame is directed towards the mold surface to be coated.

The aforesaid Seeman '409 patent describes a mold surface soot-coating system in which a mixture of MAPD gas and oxygen, after igniting by a natural gas-derived pilot flame, is directed toward a surface to be coated. As noted in Seaman '409, because of the inherently intermittent nature of the operation of a soot burner in a glass manufacturing machine, a mixture of MAPD gas and oxygen must be carefully controlled so as to prevent backfiring of the flame from the burner into the burner nozzle (column 3, lines 9 - 20), and it is understood that the system of the Seeman '409 patent has proven to be capable of operating in a successful manner in sooting glass-making molds of a Hartford 28 rotary tableware glass forming machine, where a single sooting burner can service all molds on a rotating table. In that regard, the pulse rate of a sooting burner for a Hartford 28 tableware machine occurs at a fairly high frequency, and any tendency of backfiring to occur by the backflow of oxygen into the fuel line through an air-fuel mixer can be avoided by careful control of the operating condition of the sooting apparatus.

The Hartford 28 glass making machine does not lend itself to the manufacture of hollow glass containers with restricted openings, however, such as the containers used in packaging various food and beverage products, because such products must be manufactured on a machine with split molds. An individual section (I.S.) machine, for example, as described in commonly-assigned U.S. Patent 6,098,427 (Kirkman), or U.S. Patent 3,617,233 (Mumford), the disclosure of each of which of is incorporated herein by reference, is a two-step forming machine type that operates with split glass-forming molds. In view of the need to provide a separate sooting burner for each of the various machine sections of an I.S. machine, a sooting burner for an I.S. machine will operate much less frequently than one for a Hartford 28 machine. For that reason, heretofore, it has not been possible to adapt a premix type burner of the type taught by the Seeman '409 patent to I.S. machine operation because of backfiring occurring as a result of backflow of oxygen from the fuel oxygen mixer into the fuel line during the relatively long durations between burner firing pulses.

The aforesaid '099 Morretin patent does teach a sooting system for the blank molds of a glass making machine that corresponds to an I.S. machine. This reference, which teaches the use of a mixture of acetylene and oxygen, requires two solenoid valves per burner for each fuel line (26, 27), a first solenoid to permit a low rate of fuel flow until ignition has occurred, and a second solenoid to permit a higher rate of fuel flow after ignition has occurred. The need for a second solenoid in this system adds to its cost. More particularly, this system requires a separate set of solenoids for each I.S. machine section, which is not only costly but can also result in section-by-section oxygen fuel variations over the multiple sections of an I.S. machine.

### BRIEF DESCRIPTION OF THE INVENTION

According to the present invention there is provided a method and an apparatus for sooting glass-contacting surfaces of a mold of a glass manufacturing machine, such as an I.S. machine. In such method and apparatus, which must operate intermittently with longer dwells between pulses than those of a glass tableware manufacturing machine, for example, a Hartford 28 machine, flame is provided by a nozzle surface mixing burner to which separate streams of fuel and an oxidant, such as relatively pure oxygen, are led, so that no backfiring can occur by a backflow through a mixer of oxidant into a fuel line. In the method and apparatus of the present invention, the fuel, which is preferably mapp gas, is burned in a deficiency of the oxidant to produce soot, and the flame from the burning stream is directed into a glass manufacturing mold along its central axis.

To facilitate the practice of the method and apparatus of the present invention, a nozzle design is provided to ensure rapid mixing of the fuel and oxidant immediately downstream of the nozzle, so that all portions of the mold surface to be coated are contacted by the flame from the nozzle for proper sooting of all such portions. This is accomplished by emitting the oxidant (or the fuel) from the nozzle in an annular cluster of streams that partly outwardly diverge from the longitudinal central axis of the nozzle, and by admitting the fuel (or the oxidant) in an annular stream surrounding the cluster of fuel streams and generally parallel to the longitudinal central axis of the nozzle; consequently, the stream of oxidant readily intersects the fuel streams in the cluster of fuel streams to form a combustible mixture very close to the downstream tip of the nozzle, but without permitting backflow of one of the reactants into the nozzle passage for the other reactant during the dwell periods occurring between cycles of an I.S. machine section.

Accordingly, it is an object of the present invention to provide an improved method and apparatus for applying soot to a molten glass contacting surface. More particularly, it is an object of the present invention to provide a method and an apparatus of the aforesaid character that is suitable for intermittent operation, even with relatively long dwell periods between consecutive pulses, to permit the method and apparatus to be applied to a glass container forming machine, such as an I.S. machine.

It is also an object of the present invention to provide a surface-mixing burner that is well suited for use in the practice of the method and apparatus of the present invention.

For a further understanding of the present invention and the objects thereof, attention is directed to the drawing and the following brief description thereof, to the detailed description of the invention, and to the appended claims.

### BRIEF DESCRIPTION OF THE DRAWINGS

Fig. 1 is a schematic view of an embodiment of apparatus according to the present invention for use in the practice of a method of the present invention;
Fig. 2 is an enlarged fragmentary view of a portion of the apparatus of Fig. 1;
Fig. 3 is a view similar to Fig. 2 of an alternate embodiment of the apparatus that is shown in Fig. 2;
Fig. 4 is a view illustrating, in cross-section, a burner nozzle for use in the method and apparatus of Fig. 1 to apply soot to a glass container forming machine mold, which is shown in outline;
Fig. 5 is a front elevation view, at an enlarged scale, of the burner nozzle of Fig. 4;
Fig. 6 is a sectional view taken on line 6-6 of Fig. 5;
Fig. 7 is a sectional view taken on line 7- 7 of Fig. 5; and
Fig. 8 is an elevation view showing the burner nozzle of Figs. 5 - 7 in combination with a spark plug and elements for cleaning soot from the elements of the spark plug and the burner nozzle itself.

### DETAILED DESCRIPTION OF THE INVENTION

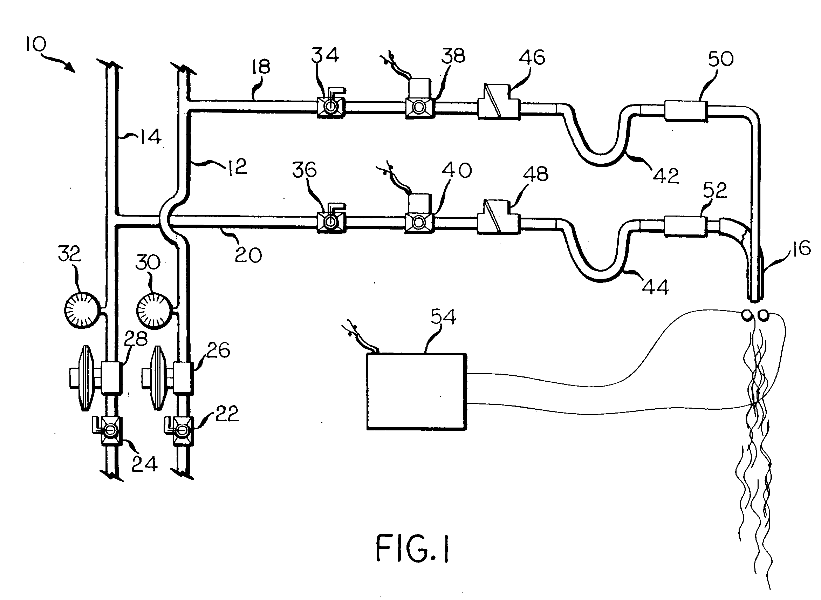

A glass-contacting mold surface sooting system according to the present invention is illustrated generally by reference numeral 10 in Fig. 1. The sooting system 10 has an oxidant supply manifold 12 and a fuel supply manifold 14. A pressurized oxidant from a source (not shown) is delivered to the manifold 12, and a pressurized fuel from a source (not shown) is delivered to the manifold 14. The oxidant delivered to manifold 12 is preferably relatively pure oxygen, such as bottled oxygen from a commercial source, though the use of an oxygen-enriched air supply is also contemplated. The fuel delivered to the manifold 14 is preferably mapp gas. Oxidant from the manifold 12 is delivered to a burner 16 of the surface mixing type through an oxidant line 18, and fuel from the manifold 14 is delivered to the burner 16 through a fuel line 20. Though only one burner 16, one oxidant line 18, and one fuel line 20 are shown in Fig. 1, it is to be understood that there will be a separate set of such elements for each section of an I.S. glass container forming machine, for example eight sets of such elements for an eight-section I.S. machine.

The oxidant manifold 12 has a shutoff valve 22 therein; likewise, the fuel manifold 14 has a shutoff 24 valve therein, it being understood that each of the shutoff valves 22, 24, at any given time will either be open or closed, depending on whether or not it is desired to use the burner 16 to apply soot to a molten glass contacting surface of a glass manufacturing machine. Similarly, the oxidant manifold 12 has a pressure regulator 26 therein, at a location downstream of the shutoff valve 22, and the fuel manifold 14 has a pressure regulator valve 28 therein, downstream of the shutoff valve 24, so that oxidant and fuel going into the lines 18 and 20, respectively, will be at regulated pressures. In that regard, the oxidant manifold 12 and the fuel manifold 14 are provided with pressure gauges 30 and 32, respectively, downstream of the pressure regulators 26 and 28, respectively, to ensure that the pressures that are maintained in the oxidant manifold 12 and the fuel manifold 14, respectively, are suitable for proper operation of each burner nozzle 16 that is supplied therefrom.

The oxidant line 18 and the fuel line 20 are provided with shutoff valves 34 and 36, respectively, to permit the burner 16 that is supplied therefrom to be shut off without shutting off any other burners to any other I.S. machine sections to be shutoff. In that regard, it is to be understood that each of the shutoff valves 34 and 36 will either be open or close at any given time, depending on whether or not it is desired to use the burner 16. Flow through the oxidant line 18 to the burner 16, while the shutoff valve 34 is open to flow, will either be on or off, depending on the operation of a 2-way solenoid valve 38; likewise, flow through the fuel line 20 to the burner 16, while the shutoff valve 36 is open to flow will either be on or off depending on the operation of a 2-way solenoid valve 40. Further, to accommodate changes or variations in the length of the oxidant line 18 and the fuel line 20, the oxidant line 18 is provided with a flexible hose 42 and the fuel line 20 is provided with a flexible hose 44. To prevent backflow through the oxidant line 18 and the fuel line 20, the oxidant line 18 is provided with a check valve 46 and the fuel line 20 is provided with a check valve 48. To suppress any flame that may result from a backfiring of the burner 16, the oxidant line is provided with a flash suppressor 50, and the fuel line 20 is provided with a flash suppressor 52.

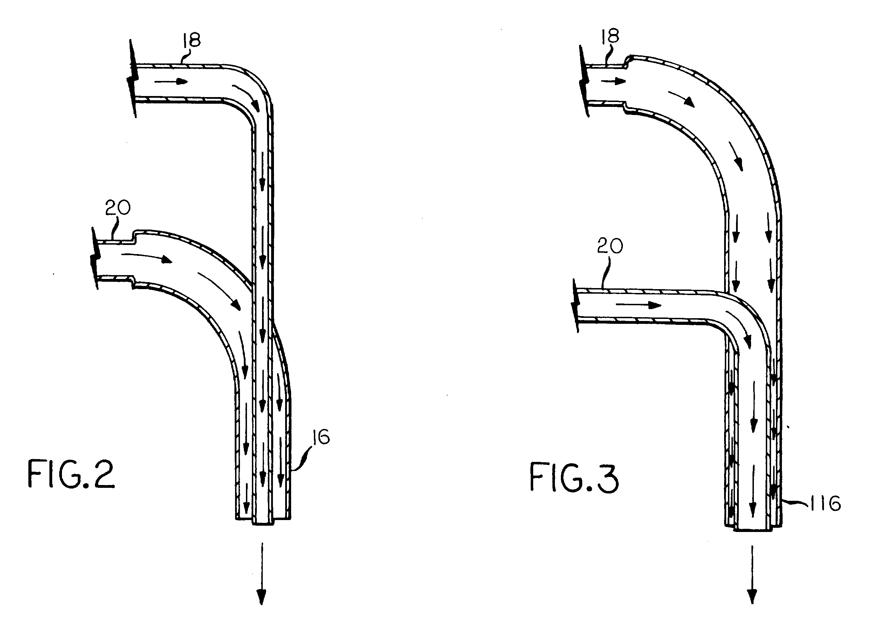

The fuel and oxidant flowing from the burner 16, as received from the oxidant line 18 and the fuel line 20, will immediately begin to mix and as they exit from the burner 16, with the fuel stream in an annulus surrounding the oxidant stream in the illustrated arrangement. Shortly thereafter, the at least partly mixed fuel and oxidant, which will at least mix by the turbulence associated with their flow in conjunction with normal molecular diffusion, will form a combustible mixture and the combustible mixture will be ignited by a spark from a spark igniter 54 (shown schematically). By maintaining the flow rate of oxidant through the oxidant line 18 at a level substantially less than that required for complete combustion of the fuel flowing through the fuel line 20, at its flow rate, the flame from the burner 16 will be very sooty and soot therefrom will tend to deposit on any surface that is in the flow path of such flame. While Figs. 1 and 2 show an arrangement in which the burner 16 operates with fuel flowing therefrom in an annulus surrounding the oxidant, it is also contemplated, as shown in Fig. 3, that a burner 116 can be provided in which oxidant from the oxidant line 18 flows therefrom in an annulus surrounding the flow of fuel from the fuel line 20.

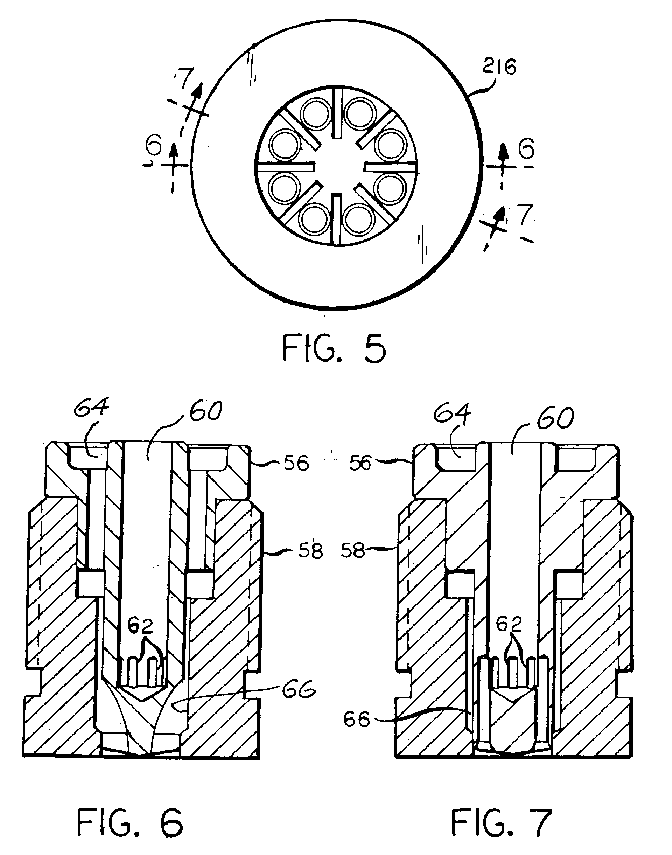

A special surface-mixing burner 216 is shown in Figs. 5 - 7. The burner 216, which operates generally according to the arrangement of Fig. 3, that is, with fuel flowing on the interior of an annular oxidant stream, has a tip 56 inserted coaxially into an annular cap 58. Fuel is delivered to the tip 56 along its longitudinal central axis through a passage 60 that is closed at its downstream end, and exits from the tip 56 through an annular array of passages 62, each of which is in fluid flow communication with the passage 60. An oxidant flows in an annular pattern to the tip 56 through an annular passage 66, and flows from the burner 216 parallel to the longitudinal central axis of the tip 56 through an annular passage 66 that surrounds outlets from the passages 62 and is defined by an exterior of the tip 56 and an interior of the annular cap 58. With oxidant exiting from the burner 216 parallel to the longitudinal central axis of the tip 56, and fuel flowing from the burner 216 through a multiplicity of small streams, there will be very rapid mixing of the fuel and oxidant streams, and a combustible mixture of fuel and oxidant will form very shortly downstream of the outlet from the burner 216, to be ignitable by a spark igniter such as the spark igniter 54.

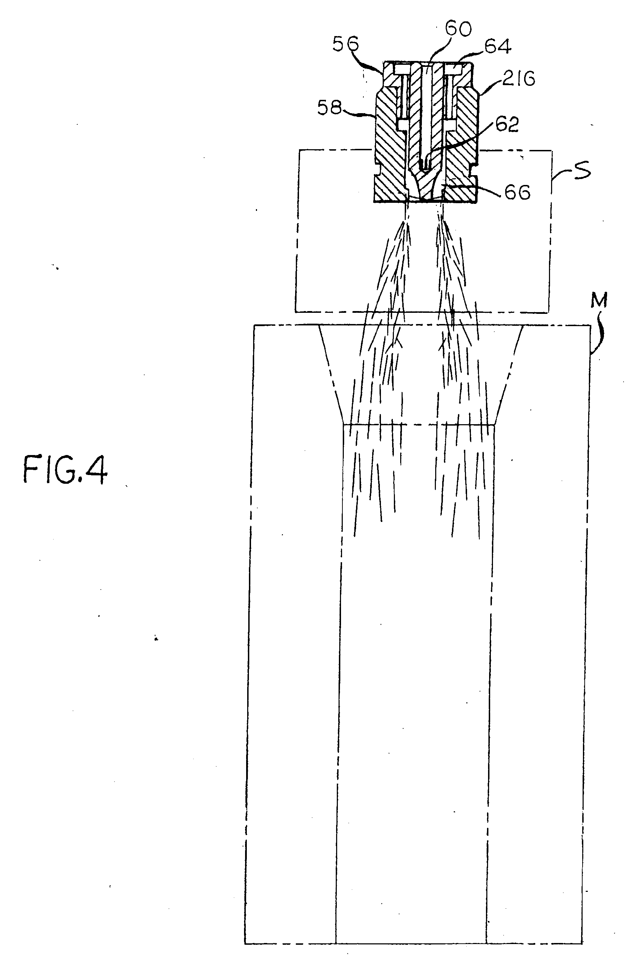

As shown in Fig. 4, the sooting nozzle 216 is positioned with its longitudinal central axis coaxial with a longitudinal central axis of a glass manufacturing mold M, which is shown in outline, with only a short distance between an outlet from the burner 216 and an inlet to such mold M. Due to rapid mixing of oxidant and fuel streams from the burner 216, flame from the burner 216 will contact all portions of the inside, molten glass contacting surfaces of the mold M, for effective sooting of all such portions, even those at or very near the inlet to the mold M. Preferably, an annular shroud S, which is shown in outline, is provided to confine flame from the burner 216 so that it flows properly into the mold M. The shroud S begins immediately upstream of the outlet from the burner 216, and extends almost to the inlet of the mold M.

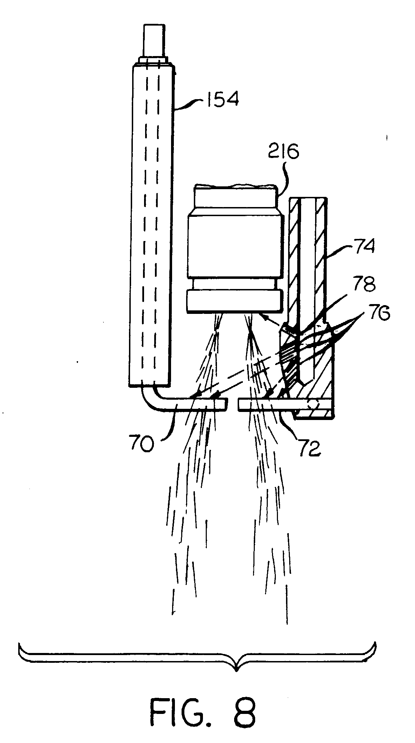

Fig. 8 illustrates the assembly of the burner nozzle 216 with a specific embodiment of a spark plug 154. The spark plug 154 has an electrode 70 and a ground electrode 72, which extends from a purge air inlet 74. The spark plug 72 is periodically energized to ignite the streams of fuel and oxidant that flow from the burner nozzle 216 during pulses of the streams, and is spaced from the burner nozzle a distance sufficient to permit the fuel and oxidant streams to mix to a degree sufficient to be combustible. During the soot generation portion of the cycle, the burner nozzle 216 is positioned over a mold, fuel and oxygen are delivered to the burner nozzle 216, and the spark plug 154 is energized to ignite the mixture.

The air purge nozzle 74 receives compressed air from a source (not shown) and discharges air in pulses therefrom through downwardly inclined passages 76, which are directed at the electrode 70 and the ground electrode 72, and through upwardly included passages 78, which are directed at the front of the nozzle. Head cleaning to remove soot buildup occurs after the sooting head, burner nozzle 216, has left location above the mold, and cleaning occurs in two phases. In the first phase, a flame from the nozzle 216, and air is introduced through the nozzle 74, which further oxidizes the flame to thereby burn any soot buildup from the nozzle 216 and the electrodes 70, 72. During the second phase, the fuel and oxygen flows to the nozzle are briefly discontinued and the spark plug 154 is not energized, and the purge air is left on for a short period of time to mechanically knock off loose soot.

Although the best mode contemplated by the inventors for carrying out the present invention as of the final date hereof has been shown and described herein, it will be apparent to those skilled in the art that suitable modifications, variations, and equivalents from the mode that has been shown and described, without departing from the scope of the invention, such scope being limited solely by the terms of the following claims and the legal equivalents thereof.

## Claims

1. A method of introducing particles of soot to a molten glass contacting element of a glass manufacturing machine, the method comprising:
delivering, in pules, a supply of a carbonaceous fuel to a burner (16, 116) of a surface mixing type;
delivering, in overlapping pulses, a supply of an oxidant at a rate insufficient to completely oxidize the fuel to the burner (16,P 116);
admitting the fuel and oxidant together from the burner (16, 116) to flow as separate streams towards the mold (M), to be combined in a combustible mixture at a location downstream of a nozzle (216); and
igniting the combustible mixture of fuel and oxidant at a location between the nozzle (216) and the mold (M) to introduce soot into the mold.

2. The method according to claim 1 wherein the fuel is an acetylene-based fuel.

3. The method according to claim 2 wherein the acetylene-based fuel comprises a mixture of methacetylene and propadiene.

4. The method any of claims 1-3 wherein the oxidant consists essentially of pure oxygen.

5. The method according to claim 1 and further wherein said step of igniting the combustible mixture is performed by a spark igniter (54, 154) having an electrode (70) and a ground electrode (72), and further comprising:
burning accumulated soot from the electrode (70) and the ground electrode (72) between pulses of the carbonaceous fuel and the oxidant.

6. Apparatus for producing a soot-laden flame for application of soot particles to a molten glass contacting surface of a glass manufacturing machine, said apparatus comprising:
a burner (16, 116) of a surface mixing type for the flow of separate streams of a fuel and an oxidant therethrough;
an oxidant (18)line for delivering an oxidant directly to the burner (16, 116);
a fuel (20) line for delivering a carbonaceous fuel to the burner (16, 116), without prior of the fuel with the oxidant; and
a spark (54, 154)igniter for igniting a combustible mixture of the fuel and the oxidant at a location downstream of an outlet from the burner (16, 116).

7. Apparatus according to claim 6 wherein the oxidant (18) line includes only one solenoid (38) valve for intermittent delivery of oxidant to the burner (16, 116); and
wherein the fuel line (20) delivery comprises only a single solenoid (40) valve for intermittent delivery of fuel to the burner (16, 116).

8. Apparatus according to claim 6 or 7 and further comprising:
an oxidant manifold for delivering the oxidant to the oxidant (18) line;
and
a fuel (14) manifold for delivering fuel to the fuel (20) line.

9. Apparatus according to claim 8 and further comprising:
a first pressure (26) regulator in the oxidant (12) manifold for regulating the pressure at which oxidant is delivered to the oxidant (18) line: and
a second pressure (28) regulator in the fuel ((14) manifold for regulating the pressure at which fuel is delivered to the fuel (20) line.

10. Apparatus according any of claims 6-9 wherein:
oxidant is delivered to the burner (116) to flow in an annular pattern parallel to a longitudinal central axis of the burner; and
fuel is delivered to the burner (116) to flow through the burner along a path that is radially interior of a path followed by the oxidant.

11. Apparatus according to claim 10 wherein the burner (116) comprises a tip (56) and an annular cap (58) that surrounds at least a downstream portion of said tip (56) ;
wherein fuel is delivered to the burner (116) along the longitudinal central exits from the tip through a multiplicity of separate passages (62) from the tip, the separate passages (62)from the tip (56) being arranged in an annular array; and
wherein oxidant is delivered from the burner in an annulus (66) between an exterior of the tip (56) and an interior or the cap (58) and in a stream surrounding the passages (62) through which fuel flows.

12. Apparatus according to any of claims 6-11 wherein the fuel (20) line includes a flash suppressor (52).

13. Apparatus according to any of claims 6-12 wherein the oxidant line includes a flash suppressor (50).

14. Apparatus according to any of claims 6-13 wherein said spark (154) ignitor includes an electrode (70) and a ground electrode (72) and further comprising:
a source of compressed air, said source of compressed air having a plurality of outlets (76) directed at said electrode (70) and a plurality of outlets (76) directed at said ground electrode (72).

15. Apparatus according to claim 14 wherein said source of compressed air further comprises a plurality of outlets (78) directed at an outer, downstream surface of said burner.

16. A burner nozzle for partially oxidizing a mixture of a fuel and an oxidant to produce soot for use in a glass manufacturing process, said burner (216) nozzle comprising:
an inner member (56); and
an outer member (58) surrounding at least a downstream portion of said inner member (56) and
defining an annulus (66) therewith;
a passage (60) extending through said inner member (56) for delivery of a first gas through said inner member to at least a single outlet (62)from said inner member;

17. The burner nozzle according to claim 16 wherein said passage 60 extending through said inner member (56) comprises a plurality of separate passages (62)extending therefrom in an annular array.

18. The burner nozzle according to claim 17 wherein:
each of said separate passages extends an angle that converges from a longitudinal central axis of said inner member (56).
